(19) Europäisches Patentamt
European Patent Office
Office européen des brevets

(11) **EP 3 785 040 B1**

(12) **FASCICULE DE BREVET EUROPEEN**

(45) Date de publication et mention
de la délivrance du brevet:
**20.12.2023 Bulletin 2023/51**

(21) Numéro de dépôt: **19724555.8**

(22) Date de dépôt: **18.04.2019**

(51) Classification Internationale des Brevets (IPC):
**G01S 5/02** *(2010.01)*   **G05D 1/02** *(2020.01)*
**G06F 17/16** *(2006.01)*

(52) Classification Coopérative des Brevets (CPC):
**G06F 17/11; G01S 5/0289**

(86) Numéro de dépôt international:
**PCT/FR2019/050930**

(87) Numéro de publication internationale:
**WO 2019/207238 (31.10.2019 Gazette 2019/44)**

(54) **DISPOSITIF DE LOCALISATION**

**LOKALISIERUNGSVORRICHTUNG**

**LOCATING DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2018 FR 1853553**

(43) Date de publication de la demande:
**03.03.2021 Bulletin 2021/09**

(73) Titulaire: **INRIA - Institut National de Recherche en Informatique et en Automatique**
**78150 Le Chesnay (FR)**

(72) Inventeurs:
• **DAGHER, Roudy**
**59000 Lille (FR)**
• **ZHENG, Gang**
**59000 Lille (FR)**
• **QUADRAT, Alban**
**91190 Gif sur Yvette (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 3 001 217      EP-A2- 1 617 601**
**US-A1- 2015 201 309**

• **YUE WANG ET AL: "Anchor-Based Three-Dimensional Localization Using Range Measurements", 2012 8TH INTERNATIONAL CONFERENCE ON WIRELESS COMMUNICATIONS, NETWORKING AND MOBILE COMPUTING, 1 septembre 2012 (2012-09-01), pages 1-5, XP055537396, DOI: 10.1109/WiCOM.2012.6478432 ISBN: 978-1-61284-682-8**

## Description

L'invention concerne le domaine de la localisation et plus particulièrement la localisation de sources mobiles dans un environnement munis d'ancres.

Le domaine de la localisation est particulièrement prolifique depuis une quinzaine d'année. Avec le développement du GPS, la géolocalisation a connu un usage sans cesse croissant, et de plus en plus d'applications en font un usage central.

Cependant, le GPS pose des problèmes de disponibilité et de consommation d'énergie. Pour cette raison, le domaine de la localisation par traitement du signal, par exemple sur la base des échanges avec des stations wifi, des antennes relais, ou encore avec des balises (« beacons » en anglais), a connu un essor remarquable.

La plupart des solutions relèvent de la triangulation et présentent une précision assez faible et/ou des contraintes fortes, comme la connaissance précise de positions absolues de références, comme par exemple dans les documents EP3001217, EP1617601 et US20115/201309. Ou encore dans le document "Anchor-based three-dimensional localization using range measurements" par Yue Wang et al. dans 8TH International Conférence On Wireless Communications, Networking And Mobile Computing (2012-09-01).

L'invention vient améliorer la situation. A cet effet, l'invention propose un dispositif de localisation comprenant :

- une mémoire agencée pour recevoir des données de distance entre une pluralité d'ancres et une ou plusieurs sources mobiles en une pluralité d'emplacements distincts entre eux, le nombre d'ancres et le nombre d'emplacements remplissant le critère que l'un doit être supérieur à quatre et est désigné en tant que nombre primaire et l'autre supérieur à dix et est désigné en tant que nombre secondaire,
- un décomposeur agencé pour accéder aux données de distance et pour calculer une décomposition en valeurs singulières d'une matrice formée par le produit de la matrice des distances euclidiennes tirée des données de distance par deux matrices carrées dont l'une a une dimension égale au nombre primaire au carré et présente une première ligne d'éléments nuls, une première colonne dont les éléments sont égaux à moins un à l'exception du premier élément qui est nul, les autres éléments formant une matrice identité d'ordre égal au nombre primaire moins 1, et l'autre est la transposée d'une matrice de dimension égale au nombre secondaire au carré présentant une première ligne d'éléments nuls, une première colonne dont les éléments sont égaux à moins un à l'exception du premier élément qui est nul, les autres éléments formant une matrice identité d'ordre égal au nombre secondaire moins un,

- un réducteur agencé pour calculer un vecteur de résolution minimisant selon les moindres carrés la différence entre le produit d'une matrice de simplification par le vecteur de résolution et d'une matrice formée par le produit de la matrice des distances euclidiennes tirée des données de distance d'une part par un vecteur dont tous les éléments valent un à l'exception du premier élément qui est nul, et d'autre part par un vecteur dont tous les éléments sont nuls à l'exception du premier qui vaut un, la matrice de simplification étant tirée de la multiplication entre le produit de Khatri-Rao par partitionnement en lignes de la première matrice de la décomposition en valeurs singulières réalisée par le décomposeur avec elle-même et une matrice de duplication de dimension trois, concaténée avec le double de l'opposé de la première matrice de la décomposition en valeurs singulières réalisée par le décomposeur,
- un solveur agencé pour tirer un vecteur d'inversion à partir des trois derniers éléments du vecteur de résolution et une matrice d'inversion formée à partir des autres éléments du vecteur de résolution, pour déterminer une matrice de transformation telle que la matrice d'inversion est égale au produit de la matrice de transformation par sa transposée, et pour retourner d'une part une matrice de coordonnées des ancres et d'autre part une matrice de coordonnées des emplacements à partir de la matrice de transformation, du vecteur d'inversion, de la première matrice de la décomposition en valeurs singulières réalisée par le décomposeur et du produit de la deuxième matrice et de la troisième matrice de la décomposition en valeurs singulières réalisée par le décomposeur.

Ce dispositif est particulièrement avantageux car il permet à une localisation d'une ou plusieurs sources mobiles de manière très rapide avec des contraintes faibles par rapport à l'existant.

Dans diverses variantes, le dispositif selon l'invention peut présenter une ou plusieurs des caractéristiques suivantes :

- le solveur est agencé pour déterminer la matrice de transformation comme l'agrégation de trois vecteurs de dimension trois dont le premier est le vecteur d'inversion divisé par la distance entre la première ancre et la première source mobile, le deuxième est tiré d'un vecteur de valeurs propres d'une matrice calculée à partir de la deuxième ligne de la première matrice de la décomposition en valeurs singulières réalisée par le décomposeur, du vecteur d'inversion et de la matrice d'inversion, et le troisième est calculé à partir de la deuxième ligne de la première matrice de la décomposition en valeurs singulières réalisée par le décomposeur, du vecteur d'inversion et de la matrice de transformation,

- le solveur est agencé pour déterminer la matrice de transformation comme l'agrégation de trois vecteurs de dimension trois dont le premier est le vecteur d'inversion divisé par la distance entre la première ancre et la première source mobile, le deuxième est calculé à partir de la deuxième ligne de la première matrice de la décomposition en valeurs singulières réalisée par le décomposeur, du vecteur d'inversion et de la matrice d'inversion, et le troisième est tiré d'un vecteur de valeurs propres d'une matrice calculée à partir de la deuxième ligne de la première matrice de la décomposition en valeurs singulières réalisée par le décomposeur, du vecteur d'inversion et de la matrice d'inversion,
- le solveur est agencé pour déterminer la matrice de transformation comme l'agrégation de trois vecteurs de dimension trois dont le premier est calculé à partir de la matrice d'inversion et de la deuxième ligne de la première matrice de la décomposition en valeurs singulières réalisée par le décomposeur, le deuxième est calculé à partir de la matrice d'inversion, de la deuxième ligne de la première matrice de la décomposition en valeurs singulières réalisée par le décomposeur et de la troisième ligne de la première matrice de la décomposition en valeurs singulières réalisée par le décomposeur, et le troisième est formé à partir de la matrice d'inversion et du produit vectoriel entre la transposée de la deuxième ligne de la première matrice de la décomposition en valeurs singulières réalisée par le décomposeur et la transposée de la troisième ligne de la première matrice de la décomposition en valeurs singulières réalisée par le décomposeur, et
- le solveur est en outre agencé pour calculer une matrice de changement de repère entre les coordonnées de trois ancres dans un repère absolu et les coordonnées de ces trois ancres dans la matrice de coordonnées des ancres déterminée par le solveur, et pour retourner une matrice de coordonnées absolues des emplacements à partir de la matrice de changement de repère et la matrice de coordonnées des emplacements déterminée par le solveur.

L'invention concerne également un procédé de localisation mis en oeuvre par ordinateur comprenant les opérations suivantes :

a) Recevoir des données de distance entre une pluralité d'ancres et une ou plusieurs sources mobiles en une pluralité d'emplacements distincts entre eux, le nombre d'ancres et le nombre d'emplacements remplissant le critère que l'un doit être supérieur à quatre et est désigné en tant que nombre primaire et l'autre supérieur à dix et est désigné en tant que nombre secondaire,

b) Calculer une décomposition en valeurs singulières d'une matrice formée par le produit de la matrice des distances euclidiennes tirée des données de distance par deux matrices carrées dont l'une a une dimension égale au nombre primaire au carré et présente une première ligne d'éléments nuls, une première colonne dont les éléments sont égaux à moins un à l'exception du premier élément qui est nul, les autres éléments formant une matrice identité d'ordre égal au nombre primaire moins un, et l'autre est la transposée d'une matrice de dimension égale au nombre secondaire au carré présentant une première ligne d'éléments nuls, une première colonne dont les éléments sont égaux à moins un à l'exception du premier élément qui est nul, les autres éléments formant une matrice identité d'ordre égal au nombre secondaire moins un,

c) calculer un vecteur de résolution minimisant selon les moindres carrés la différence entre le produit d'une matrice de simplification par le vecteur de résolution et d'une matrice formée par le produit de la matrice des distances euclidiennes tirée des données de distance d'une part par un vecteur dont tous les éléments valent un à l'exception du premier élément qui est nul, et d'autre part par un vecteur dont tous les éléments sont nuls à l'exception du premier qui vaut un, la matrice de simplification étant tirée de la multiplication entre le produit de Khatri-Rao par partitionnement en lignes de la première matrice de la décomposition en valeurs singulières de l'opération b) avec elle-même et une matrice de duplication de dimension trois, concaténée horizontalement avec le double de l'opposé de la première matrice de la décomposition en valeurs singulières de l'opération b),

d) tirer un vecteur d'inversion à partir des trois derniers éléments du vecteur de résolution et une matrice d'inversion formée à partir des autres éléments du vecteur de résolution,

e) déterminer une matrice de transformation telle que la matrice d'inversion est égale au produit de la matrice de transformation par sa transposée, et

f) retourner d'une part une matrice de coordonnées des ancres et d'autre part une matrice de coordonnées des emplacements à partir de la matrice de transformation, du vecteur d'inversion, de la première matrice de la décomposition en valeurs singulières de l'opération b) et du produit de la deuxième matrice et de la troisième matrice de la décomposition en valeurs singulières de l'opération b).

Selon diverses variantes, ce procédé peut comprendre une ou plusieurs des opérations suivantes :

- l'opération e) la détermination de la matrice de transformation comme l'agrégation de trois vecteurs de dimension trois dont le premier est le vecteur d'inversion divisé par la distance entre la première ancre et la première source mobile, le deuxième est tiré d'un vecteur de valeurs propres d'une matrice calculée à partir de la deuxième ligne de la première matrice de la décomposition en valeurs singulières de l'opération b), du vecteur d'inversion et de la matrice d'inversion, et le troisième est calculé à partir de la deuxième ligne de la première matrice de la décomposition en valeurs singulières de l'opération b), du vecteur d'inversion et de la matrice d'inversion,

- l'opération e) la détermination de la matrice de transformation comme l'agrégation de trois vecteurs de dimension trois dont le premier est le vecteur d'inversion divisé par la distance entre la première ancre et la première source mobile, le deuxième est calculé à partir de la deuxième ligne de la première matrice de la décomposition en valeurs singulières de l'opération b), du vecteur d'inversion et de la matrice d'inversion, et le troisième est tiré d'un vecteur de valeurs propres d'une matrice calculée à partir de la deuxième ligne de la première matrice de la décomposition en valeurs singulières de l'opération b), du vecteur d'inversion et de la matrice d'inversion,

- l'opération e) la détermination de la matrice de transformation comme l'agrégation de trois vecteurs de dimension trois dont le premier est calculé à partir de la matrice d'inversion et de la deuxième ligne de la première matrice de la décomposition en valeurs singulières de l'opération b), le deuxième est calculé à partir de la matrice d'inversion, de la deuxième ligne de la première matrice de la décomposition en valeurs singulières de l'opération b) et de la troisième ligne de la première matrice de la décomposition en valeurs singulières de l'opération b), et le troisième est formé à partir de la matrice d'inversion et du produit vectoriel entre la transposée de la deuxième ligne de la première matrice de la décomposition en valeurs singulières de l'opération b) et la transposée de la troisième ligne de la première matrice de la décomposition en valeurs singulières de l'opération b), et

- le procédé comprend en outre l'opération suivante :
g) calculer une matrice de changement de repère entre les coordonnées de trois ancres dans un repère absolu et les coordonnées de ces trois ancres dans la matrice de coordonnées des ancres déterminée par le solveur, et pour retourner une matrice de coordonnées absolues des emplacements à partir de la matrice de changement de repère et la matrice de coordonnées des sources mobiles déterminée par le solveur.

L'invention concerne enfin un produit de programme d'ordinateur comprenant des portions de code de programme pour mettre en oeuvre le dispositif ou le procédé tels que décrits plus haut lorsque ledit programme est exécuté sur un ordinateur.

D'autres caractéristiques et avantages de l'invention apparaîtront mieux à la lecture de la description qui suit, tirée d'exemples donnés à titre illustratif et non limitatif, tirés des dessins sur lesquels :

- la Figure 1 représente un mode de réalisation d'un dispositif selon l'invention,
- la Figure 2 représente un exemple d'une fonction de localisation mise en oeuvre par le dispositif de la Figure 1,
- la Figure 3 représente un exemple de mise en oeuvre d'une opération de la Figure 2, et
- la Figure 4 représente un exemple de mise en oeuvre d'une autre opération de la Figure 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

En outre, la description détaillée est augmentée de l'annexe A, qui donne la formulation de certaines formules mathématiques mises en oeuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant.

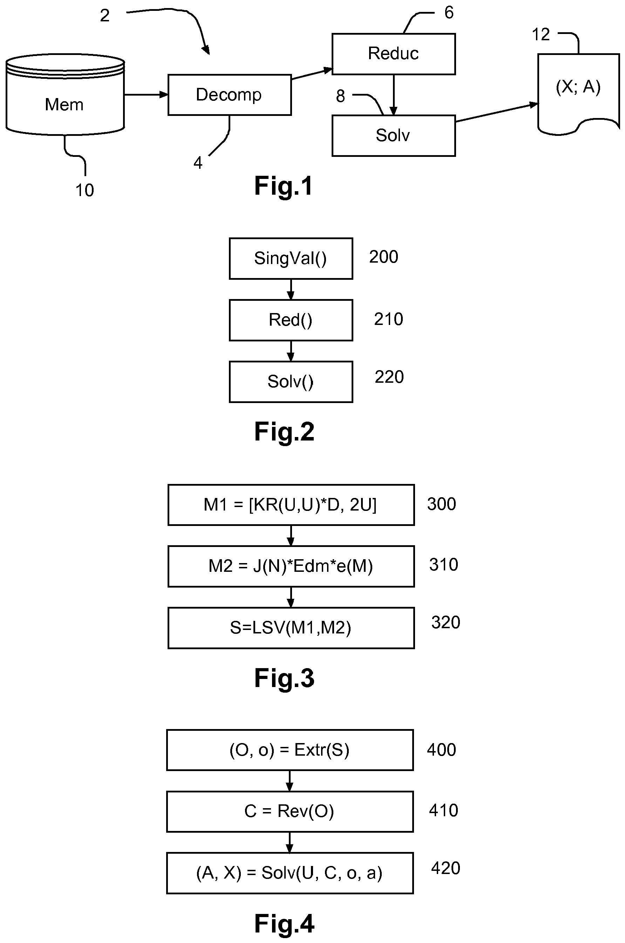

La Figure 1 représente un mode de réalisation d'un dispositif selon l'invention.

Le dispositif 2 comprend un décomposeur 4, un réducteur 6, un solveur 8 et une mémoire 10.

Dans l'exemple décrit ici, le dispositif 2 est mis en oeuvre sur un ordinateur qui reçoit des données de localisation. Cet ordinateur est ici de type PC muni du système d'exploitation Windows 7, d'une carte graphique capable de gérer un ou plusieurs affichages. Bien sûr, il pourra être réalisé de manière différente, avec un système d'exploitation différent, avec une communication avec ou sans fil avec le ou les affichages. Le terme ordinateur doit être interprété au sens large du terme. Par exemple, il pourrait être une tablette ou un smartphone, un terminal d'interaction avec un serveur de calcul, ou un élément sur une grille de ressources distribuées, etc.

Le décomposeur 4, le réducteur 6 et le solveur 8 sont ici des programmes exécutés par le processeur de l'ordinateur. En variante, un ou plusieurs de ces éléments pourrait être mis en oeuvre de manière différente au moyen d'un processeur dédié. Par processeur, il doit être compris tout processeur adapté aux traitements de données décrits plus bas. Un telprocesseur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

La mémoire 10 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif 2 peuvent être stockées sur tout type de mémoire similaire à la mémoire 10, ou sur celle-ci. Ces données peuvent être effacées après que le dispositif ait effectué ses tâches ou conservées.

Le dispositif 2 reçoit comme données d'entrée des distances entre une pluralité d'ancres et une pluralité de sources. Ces distances sont reliées aux coordonnées des ancres et des sources. Traditionnellement, ce type de problème est abordé en cherchant à résoudre les équations quadratiques liées aux distances.

La Demanderesse a découvert qu'en utilisant la matrice des distances euclidiennes entre les sources A et les ancres X, il est possible de résoudre entièrement les coordonnées des ancres X et des sources A, dès lors qu'il y a au moins 4 ancres et au moins 10 sources mobiles, les ancres et les sources mobiles pouvant être inversées.

Dans le contexte de l'invention, la notion de sources mobiles doit être comprise au sens de l'emplacement de telles sources. En effet, ce sont les distances entre 10 emplacements distincts et 4 ancres (ou l'inverse) qui permettent de déterminer les coordonnées des ancres et des sources. Ainsi, il pourra y avoir une unique source mobile qui se déplace par rapport aux ancres (par exemple un drone, ou un utilisateur se déplaçant avec son téléphone portable), et dix mesures à dix emplacements distincts de cette unique source mobile. Bien sûr, il peut y avoir un mélange des deux. Par exemple, les données de distance peuvent concerner une seule mesure de distance par rapport à 4 ancres pour 8 sources mobiles distinctes, et deux mesures de distance par rapport au 4 ancres pour une autre source mobile, ou encore une seule mesure de distance par rapport à 4 ancres pour 6 sources mobiles distinctes, et deux mesures de distance par rapport au 4 ancres pour deux autres sources mobiles, etc.

Dans la suite, la matrice des distances euclidiennes entre les sources A et les ancres X sera notée Edm(X, A). Ainsi, le dispositif 2 retourne des données de localisation 12 qui décrivent les coordonnées exactes des matrices d'ancres X et de sources mobiles A dans un référentiel choisi.

La méthode mise en oeuvre dans l'invention consiste à supprimer les termes quadratiques de la matrice des distances euclidiennes pour réduire le problème à la détermination d'une matrice de transformation C et un vecteur de translation $(A_1-X_1)$, et en séparant les variables en X et en A en s'occupant séparément de la partie gauche de la matrice des distances euclidiennes et de la partie droite de la matrice des distances euclidiennes. La combinaison de ces deux principes conduit à un problème de moindres carrés qui peut être résolu si les conditions portant sur le nombre d'ancres et le nombre de sources mobiles est respecté. Une fois ce problème résolu, il est possible d'extraire X et A en choisissant un repère approprié.

Les équations [10] et [15] représentent la matrice X d'ancres, la matrice A de sources mobiles, la matrice D de distances entre ancres et sources mobiles, et la matrice des distances euclidiennes Edm(X, A). L'équation [20] décrit la décomposition en valeurs singulières du produit de la matrice des distances euclidiennes entre les matrices X et A par respectivement une matrice $J_N$ de dimension N*N, et une matrice $J_M$ de dimension M*M. Les matrices $J_N$ et $J_M$ sont explicitées dans l'équation [22]. L'équation [25] utilise la décomposition en valeurs singulières de l'équation [20] aux produits matriciels $J_N X$ d'une part et $J_M A$ d'autre part. L'équation [30] réexprime la deuxième ligne de l'équation en la réécrivant pour faire apparaître une factorisation en $(A_1-X_1)$.

L'équation [35] exprime une relation entre la matrice des distances euclidiennes et le produit matriciel $J_N X$ et peut être démontrée à partir de la matrice D et de l'équation [10]. Les équations [40] et [45] expriment deux autres égalités qui, réinjectées dans l'équation [35], permettent de la reformuler conformément à l'équation [50]. On notera que le produit dans le membre à droite de l'équation [40] est un produit de Khatri-Rao avec partitionnement en lignes (voir équation [42], où les matrices ont m lignes et $\otimes$ désigne le produit de Kronecker), et que la matrice $D_3$ de l'équation [45] est la matrice de duplication de dimension 3 qui permet de d'obtenir vec(A) à partir de vech(A) et est explicitée avec l'équation [47], les fonctions vec() et vech() étant les opérateurs de vectorisation.

Ainsi, l'équation [50] représente un système d'équation pouvant être résolus selon les moindres carrés, l'inconnue étant formée par le deuxième élément du membre de gauche, car le premier élément du membre de gauche et le membre de droite sont connus.

La solution de l'équation [50] est représentée avec l'équation [55], qui peut être résolue comme présenté avec l'équation [60]. Une fois cela fait, le résultat peut être réinjecté dans l'équation [30] pour recouvrer les matrices d'ancres X et de sources mobiles A.

La Figure 2 représente un exemple d'une fonction de localisation mise en oeuvre par le dispositif de la Figure 1.

La fonction commence dans une opération 200 par la décomposition en valeurs singulières du produit matriciel de l'équation [20], via l'exécution d'un fonction SingVal() par le décomposeur 4.

Ensuite, dans une opération 210, le réducteur 6 exécute une fonction Red(). La fonction Red() réalise les calculs permettant de définir le problème de l'équation [50]. La Figure 3 représente un exemple de mise en oeuvre de la fonction Red().

La fonction Red() commence dans une opération 300 par le calcul du premier élément du membre de gauche de l'équation [50]. Pour cela, le produit de Khatri-Rao de la matrice U déterminée à l'opération 200 avec elle-même est calculé, et le double de l'opposé de la matrice U lui est concaténé horizontalement.

Ensuite, dans une opération 310, le membre de droite de l'équation [50] est calculé, au moyen des matrices $J_N$ et le vecteur $e_M$, la matrice $J_N$ ayant déjà été définie, et le vecteur $e_M$ étant un vecteur de dimension M dont tous les éléments sont nuls, sauf le premier qui est égal à 1.

Enfin, dans une opération 320, le problème de moindres carrés est résolu par une fonction LSV() afin de déterminer le vecteur S de l'équation [55]. Une étude du problème de l'équation [50] montre qu'une infinité de solutions existe, à une rotation orthogonale près. Il convient donc de fixer des conditions sur le repère dans lequel on souhaite exprimer les matrices X et A pour déterminer une solution dans ce repère. Pour discuter de ces solutions, la matrice de transformation C est dans la suite décrite sous la forme de colonnes, et la matrice U sous la forme de lignes, comme explicité avec l'équation [62].

L'équation [65] (respectivement [75], [85]) définit un jeu de définition de repères, et l'équation [70] (respectivement [80] et [90]) définit la matrice C solution correspondante :

- dans le cas de l'équation [65], on part du principe que l'ancre $X_1$ est l'origine du repère, que l'ancre $X_2$ est dans le plan (x ; z) du repère, et que la source mobile A1 a pour coordonnées (a1 ; 0 ; 0), $l_{max}$ étant la valeur propre la plus élevée de la décomposition en vecteurs propres de la matrice L de l'équation [70], et $E_{lmax}$ étant le vecteur propre correspondant,
- dans le cas de l'équation [75], on part du principe que l'ancre $X_1$ est l'origine du repère, que l'ancre $X_2$ a pour coordonnées (x2 ; 0 ; 0), et que la source mobile A1 a pour coordonnées (a1 ; 0 ; 0), $l_{max}$ étant la valeur propre la plus élevée de la décomposition en vecteurs propres de la matrice L de l'équation [80], et $E_{lmax}$ étant le vecteur propre correspondant, et
- dans le cas de l'équation [85], on part du principe que l'ancre $X_1$ est l'origine du repère, que l'ancre $X_2$ a pour coordonnées (x2 ; 0 ; 0), et que l'ancre $X_3$ a pour coordonnées (x3 ; y3 ; 0), et l'opérateur « x » de l'équation [90] désigne le produit vectoriel.

L'homme du métier saura identifier d'autres conditions de fixation du repère, et les solutions correspondantes, en fonction des situations.

L'invention permet ainsi de déterminer totalement les matrices X et A à partir de la seule matrice des distances D, ce qui permet d'effectuer une localisation extrêmement précise à partir d'un jeu de données restreint.

## ANNEXE A

$$X = \begin{bmatrix} X_1 \\ \cdots \\ X_N \end{bmatrix} = \begin{bmatrix} x_{1,1} & \cdots & x_{1,3} \\ \vdots & \ddots & \vdots \\ x_{N,1} & \cdots & x_{N,3} \end{bmatrix} ; \; A = \begin{bmatrix} A_1 \\ \cdots \\ A_M \end{bmatrix} = \begin{bmatrix} a_{1,1} & \cdots & a_{1,3} \\ \vdots & \ddots & \vdots \\ a_{M,3} & \cdots & a_{M,3} \end{bmatrix} \qquad [10]$$

$$D = \begin{bmatrix} \|X_1 - A_1\|_2 & \cdots & \|X_1 - A_M\|_2 \\ \vdots & \ddots & \vdots \\ \|X_N - A_1\|_2 & \cdots & \|X_N - A_M\|_2 \end{bmatrix} ; \; \mathrm{Edm(X,A)} = \begin{bmatrix} \|X_1 - A_1\|_2^2 & \cdots & \|X_1 - A_M\|_2^2 \\ \vdots & \ddots & \vdots \\ \|X_N - A_1\|_2^2 & \cdots & \|X_N - A_M\|_2^2 \end{bmatrix} \qquad [15]$$

$$J_N Edm(X,A) J_M^{\;T} = UVW \qquad [20]$$

$$J_N = \begin{bmatrix} 0 & \cdots & \cdots & \cdots & \cdots & 0 \\ -1 & 1 & 0 & \ddots & \ddots & \vdots \\ \vdots & 0 & \ddots & \ddots & \ddots & \vdots \\ \vdots & \vdots & \ddots & \ddots & \ddots & \vdots \\ \vdots & \vdots & \ddots & \ddots & \ddots & 0 \\ -1 & 0 & \cdots & \cdots & 0 & 1 \end{bmatrix} \qquad J_M = \begin{bmatrix} 0 & \cdots & \cdots & \cdots & \cdots & 0 \\ -1 & 1 & 0 & \ddots & \ddots & \vdots \\ \vdots & 0 & \ddots & \ddots & \ddots & \vdots \\ \vdots & \vdots & \ddots & \ddots & \ddots & \vdots \\ \vdots & \vdots & \ddots & \ddots & \ddots & 0 \\ -1 & 0 & \cdots & \cdots & 0 & 1 \end{bmatrix} \qquad [22]$$

$$\begin{cases} J_N X = X - 1_N X_1 \\ J_M A = A - 1_M A_1 \end{cases} => \begin{cases} J_N X = UC \\ J_M A = -\frac{1}{2}(VW)^T C^{-T} \end{cases} \qquad [25]$$

$$A - 1_M A_1 = A - 1_M X_1 - 1_M(A_1 - X_1) => \begin{cases} X - 1_N X_1 = UC \\ A - 1_M X_1 = -\frac{1}{2}(VW)^T C^{-T} + 1_M(A_1 - X_1) \end{cases} \qquad [30]$$

$$J_N EDM(X, A)e_M = diag\big((J_N X)(J_N X)^T\big) - 2J_N X(A_1 - X_1)^T \qquad [35]$$

$$diag(AXB) = (B^T \boxed{\text{x}} A)vec(X) \qquad [40]$$

$$A\boxed{\text{x}}B = \begin{bmatrix} A_1 \otimes B_1 \\ \vdots \\ A_m \otimes B_m \end{bmatrix} \qquad [42]$$

$$diag\big((UC)(UC)^T\big) = (U\boxed{\text{x}}U)vec(CC^T) = (U\boxed{\text{x}}U)D_3 vech(CC^T) \qquad [45]$$

$$D_3 = \begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 1 & 0 & 0 & 0 & 0 \\ 0 & 0 & 0 & 1 & 0 & 0 \\ 0 & 0 & 0 & 0 & 1 & 0 \\ 0 & 0 & 1 & 0 & 0 & 0 \\ 0 & 0 & 0 & 0 & 1 & 0 \\ 0 & 0 & 0 & 0 & 0 & 1 \end{bmatrix} \qquad [47]$$

$$[(U\boxed{\text{x}}U)D_d \quad -2U]\begin{bmatrix} vech(CC^T) \\ C(A_1 - X_1)^T \end{bmatrix} = J_N EDM(X, A)e_M \qquad [50]$$

$$S = \begin{bmatrix} \theta \\ \theta \end{bmatrix} = \begin{bmatrix} vech(CC^T) \\ C(A_1 - X_1)^T \end{bmatrix} \qquad [55]$$

$$CC^T = \theta => (A_1 - X_1)^T = C^{-1}\theta \qquad [60]$$

$$C = [C_1 \quad C_2 \quad C_3]; U = \begin{bmatrix} U_1 \\ U_2 \\ U_3 \end{bmatrix} \qquad [62]$$

$$\begin{cases} CC^T = \begin{bmatrix} \theta_1 & \theta_2 & \theta_3 \\ \theta_2 & \theta_4 & \theta_5 \\ \theta_3 & \theta_5 & \theta_6 \end{bmatrix} \\ d_{1,1}C_1 = \begin{bmatrix} \theta_7 \\ \theta_8 \\ \theta_9 \end{bmatrix} \\ U_2 C_2 = 0 \end{cases} \qquad [65]$$

$$C_1 = \frac{\theta}{d_{1,1}} \; ; \; C_2 = \sqrt{l_{max}} E_{l_{max}} \; ; \; C_3 = \frac{QU_2{}^T}{\sqrt{U_2 Q U_2{}^T}} \; avec \; L = Q - \frac{QU_2{}^T U_2 Q}{U_2 Q U_2{}^T} \; et \; Q = \Theta - \frac{\theta\theta^T}{d_{1,1}{}^2} \qquad [70]$$

$$\begin{cases} CC^T = \begin{bmatrix} \theta_1 & \theta_2 & \theta_3 \\ \theta_2 & \theta_4 & \theta_5 \\ \theta_3 & \theta_5 & \theta_6 \end{bmatrix} \\ d_{1,1} C_1 = \begin{bmatrix} \theta_7 \\ \theta_8 \\ \theta_9 \end{bmatrix} \\ U_2 C_3 = 0 \end{cases} \qquad [75]$$

$$C_1 = \frac{\theta}{d_{1,1}} \; ; \; C_2 = \frac{QU_2}{\sqrt{U_2{}^T Q U_2}} \; ; \; C_3 = \sqrt{l_{max}} E_{l_{max}} \; avec \; L = Q - \frac{QU_1 U_1{}^T Q}{U_1{}^T Q U_1} \; et \; Q = \Theta - \frac{\theta\theta^T}{d_{1,1}{}^2} \qquad [80]$$

$$\begin{cases} CC^T = \begin{bmatrix} \theta_1 & \theta_2 & \theta_3 \\ \theta_2 & \theta_4 & \theta_5 \\ \theta_3 & \theta_5 & \theta_6 \end{bmatrix} \\ U_2 C_2 = 0 \\ U_2 C_3 = 0 \\ U_3 C_3 = 0 \end{cases} \qquad [85]$$

$$C_1 = \frac{\theta U_2{}^T}{\sqrt{U_2 \theta U_2{}^T}} \; ; \; C_2 = \frac{\beta U_3{}^T}{\sqrt{U_3 \theta U_3{}^T}} \; avec \; \beta = \frac{\theta U_2{}^T U_2 \theta}{U_2 \theta U_2{}^T} \; ; \; C_3 = \frac{u}{\sqrt{u^T \theta^{-1} u}} \; avec \; u = U_2{}^T x U_3{}^T \qquad [90]$$

## Revendications

1. Dispositif de localisation comprenant :

   - une mémoire (10) agencée pour recevoir des données de distance entre une pluralité d'ancres et une ou plusieurs sources mobiles en une pluralité d'emplacements distincts entre eux, le nombre d'ancres et le nombre d'emplacements remplissant le critère que l'un doit être supérieur à quatre et est désigné en tant que nombre primaire et l'autre supérieur à dix et est désigné en tant que nombre secondaire,
   - un décomposeur (4) agencé pour accéder aux données de distance et pour calculer une décomposition en valeurs singulières d'une matrice formée par le produit de la matrice des distances euclidiennes (Edm(X, A)) tirée des données de distance par deux matrices carrées dont l'une a une dimension égale au nombre primaire au carré et présente une première ligne d'éléments nuls, une première colonne dont les éléments sont égaux à moins un à l'exception du premier élément qui est nul, les autres éléments formant une matrice identité d'ordre égal au nombre primaire moins 1, et l'autre est la transposée d'une matrice de dimension égale au nombre secondaire au carré présentant une première ligne d'éléments nuls, une première colonne dont les éléments sont égaux à moins un à l'exception du premier élément qui est nul, les autres éléments formant une matrice identité d'ordre égal au nombre secondaire moins un,
   - un réducteur (6) agencé pour calculer un vecteur de résolution minimisant selon les moindres carrés la différence entre le produit d'une matrice de simplification par le vecteur de résolution et d'une matrice formée par le produit de la matrice des distances euclidiennes tirée des données de distance d'une part par un vecteur dont tous les éléments valent un à l'exception du premier élément qui est nul, et d'autre part par un vecteur dont tous les éléments sont nuls à l'exception du premier qui vaut un, la matrice de simplification étant tirée de la multiplication entre le produit de Khatri-Rao par partitionnement en lignes de la première matrice de la décomposition en valeurs singulières réalisée par le décomposeur (4) avec elle-même et une matrice de duplication de dimension trois, concaténée avec le double de l'opposé de la première matrice de la décomposition en valeurs singulières réalisée par le décomposeur (4),
   - un solveur (8) agencé pour tirer un vecteur d'inversion à partir des trois derniers éléments du vecteur de résolution et une matrice d'inversion formée à partir des autres éléments du vecteur de résolution, pour déterminer une matrice de transformation telle que la matrice d'inversion est égale au produit de la matrice de transformation par sa transposée, et pour retourner d'une part une matrice de coordonnées des ancres et d'autre part une matrice de coordonnées des emplacements à partir de la matrice de transformation, du vecteur d'inversion, de la première matrice de la décomposition en valeurs singulières réalisée par le décomposeur (4) et du produit de la deuxième matrice et de la troisième matrice de la décomposition en valeurs singulières réalisée par le décomposeur (4).

2. Dispositif selon la revendication 1, dans lequel le solveur (8) est agencé pour déterminer la matrice de transformation comme l'agrégation de trois vecteurs de dimension trois dont le premier est le vecteur d'inversion divisé par la distance entre la première ancre et la première source mobile, le deuxième est tiré d'un vecteur de valeurs propres d'une matrice calculée à partir de la deuxième ligne de la première matrice de la décomposition en valeurs singulières réalisée par le décomposeur (4), du vecteur d'inversion et de la matrice d'inversion, et le troisième est calculé à partir de la deuxième ligne de la première matrice de la décomposition en valeurs singulières réalisée par le décomposeur (4), du vecteur d'inversion et de la matrice de transformation.

3. Dispositif selon la revendication 1, dans lequel le solveur (8) est agencé pour déterminer la matrice de transformation comme l'agrégation de trois vecteurs de dimension trois dont le premier est le vecteur d'inversion divisé par la distance entre la première ancre et la première source mobile, le deuxième est calculé à partir de la deuxième ligne de la première matrice de la décomposition en valeurs singulières réalisée par le décomposeur (4), du vecteur d'inversion et de la matrice d'inversion, et le troisième est tiré d'un vecteur de valeurs propres d'une matrice calculée à partir de la deuxième ligne de la première matrice de la décomposition en valeurs singulières réalisée par le décomposeur (4), du vecteur d'inversion et de la matrice d'inversion.

4. Dispositif selon la revendication 1, dans lequel le solveur (8) est agencé pour déterminer la matrice de transformation comme l'agrégation de trois vecteurs de dimension trois dont le premier est calculé à partir de la matrice d'inversion et de la deuxième ligne de la première matrice de la décomposition en valeurs singulières réalisée par le décomposeur (4), le deuxième est calculé à partir de la matrice d'inversion, de la deuxième ligne de la première matrice de la décomposition en valeurs singulières réalisée par le décomposeur (4) et de la troisième ligne de la première matrice de la décomposition en valeurs singulières réalisée par le décomposeur (4), et le troisième est formé à partir de la matrice d'inversion et du produit vectoriel entre la transposée de la deuxième ligne de la première matrice de la décomposition en valeurs singulières réalisée par le décomposeur (4) et la transposée de la troisième ligne de la première matrice de la décomposition en valeurs singulières réalisée par le décomposeur (4).

5. Dispositif selon l'une des revendications précédentes dans lequel le solveur (8) est en outre agencé pour calculer une matrice de changement de repère entre les coordonnées de trois ancres dans un repère absolu et les coordonnées de ces trois ancres dans la matrice de coordonnées des ancres déterminée par le solveur (8), et pour retourner une matrice de coordonnées absolues des emplacements à partir de la matrice de changement de repère et la matrice de coordonnées des emplacements déterminée par le solveur (8).

6. Procédé de localisation mis en oeuvre par ordinateur comprenant les opérations suivantes :

a) Recevoir des données de distance entre une pluralité d'ancres et une ou plusieurs sources mobiles en une pluralité d'emplacements distincts entre eux, le nombre d'ancres et le nombre d'emplacements remplissant le critère que l'un doit être supérieur à quatre et est désigné en tant que nombre primaire et l'autre supérieur à dix et est désigné en tant que nombre secondaire,

b) Calculer une décomposition en valeurs singulières d'une matrice formée par le produit de la matrice des distances euclidiennes (Edm(X, A)) tirée des données de distance par deux matrices carrées dont l'une a une dimension égale au nombre primaire au carré et présente une première ligne d'éléments nuls, une première colonne dont les éléments sont égaux à moins un à l'exception du premier élément qui est nul, les autres éléments formant une matrice identité d'ordre égal au nombre primaire moins un, et l'autre est la transposée d'une matrice de dimension égale au nombre secondaire au carré présentant une première ligne d'éléments nuls, une première colonne dont les éléments sont égaux à moins un à l'exception du premier élément qui est nul, les autres éléments formant une matrice identité d'ordre égal au nombre secondaire moins un,

c) calculer un vecteur de résolution minimisant selon les moindres carrés la différence entre le produit d'une matrice de simplification par le vecteur de résolution et d'une matrice formée par le produit de la matrice des distances euclidiennes tirée des données de distance d'une part par un vecteur dont tous les éléments valent un à l'exception du premier élément qui est nul, et d'autre part par un vecteur dont tous les éléments sont nuls à l'exception du premier qui vaut un, la matrice de simplification étant tirée de la multiplication entre le produit de Khatri-Rao par partitionnement en lignes de la première matrice de la décomposition en valeurs singulières de l'opération b) avec elle-même et une matrice de duplication de dimension trois, concaténée horizontalement avec le double de l'opposé de la première matrice de la décomposition en valeurs singulières de l'opération b),

d) tirer un vecteur d'inversion à partir des trois derniers éléments du vecteur de résolution et une matrice d'inversion formée à partir des autres éléments du vecteur de résolution,

e) déterminer une matrice de transformation telle que la matrice d'inversion est égale au produit de la matrice de transformation par sa transposée, et

f) retourner d'une part une matrice de coordonnées des ancres et d'autre part une matrice de coordonnées des emplacements à partir de la matrice de transformation, du vecteur d'inversion, de la première matrice de la décomposition en valeurs singulières de l'opération b) et du produit de la deuxième matrice et de la troisième matrice de la décomposition en valeurs singulières de l'opération b).

7. Procédé selon la revendication 6, dans lequel l'opération e) la détermination de la matrice de transformation comme l'agrégation de trois vecteurs de dimension trois dont le premier est le vecteur d'inversion divisé par la distance entre la première ancre et la première source mobile, le deuxième est tiré d'un vecteur de valeurs propres d'une matrice calculée à partir de la deuxième ligne de la première matrice de la décomposition en valeurs singulières de l'opération b), du vecteur d'inversion et de la matrice d'inversion, et le troisième est calculé à partir de la deuxième ligne de la première matrice de la décomposition en valeurs singulières de l'opération b), du vecteur d'inversion et de la matrice d'inversion.

8. Procédé selon la revendication 6, dans lequel l'opération e) la détermination de la matrice de transformation comme l'agrégation de trois vecteurs de dimension trois dont le premier est le vecteur d'inversion divisé par la distance entre la première ancre et la première source mobile, le deuxième est calculé à partir de la deuxième ligne de la première matrice de la décomposition en valeurs singulières de l'opération b), du vecteur d'inversion et de la matrice d'inversion, et le troisième est tiré d'un vecteur de valeurs propres d'une matrice calculée à partir de la deuxième ligne de la première matrice de la décomposition en valeurs singulières de l'opération b), du vecteur d'inversion et de la matrice d'inversion.

9. Procédé selon la revendication 6, dans lequel l'opération e) la détermination de la matrice de transformation comme l'agrégation de trois vecteurs de dimension trois dont le premier est calculé à partir de la matrice d'inversion et de la deuxième ligne de la première matrice de la décomposition en valeurs singulières de l'opération b), le deuxième est calculé à partir de la matrice d'inversion, de la deuxième ligne de la première matrice de la décomposition en valeurs singulières de l'opération b) et de la troisième ligne de la première matrice de la décomposition en valeurs singulières de l'opération b), et le troisième est formé à partir de la matrice d'inversion et du produit vectoriel entre la transposée de la deuxième ligne de la première matrice de la décomposition en valeurs singulières de l'opération b) et la transposée de la troisième ligne de la première matrice de la décomposition en valeurs singulières de l'opération b).

10. Procédé selon l'une des revendications 6 à 9, comprenant en outre l'opération suivante :
g) calculer une matrice de changement de repère entre les coordonnées de trois ancres dans un repère absolu et les coordonnées de ces trois ancres dans la matrice de coordonnées des ancres déterminée par le solveur (8), et pour retourner une matrice de coordonnées absolues des emplacements à partir de la matrice de changement de repère et la matrice de coordonnées des sources mobiles déterminée par le solveur (8).

11. Produit de programme d'ordinateur comprenant des portions de code de programme pour mettre en oeuvre le procédé selon l'une des revendications 6 à 10 lorsque ledit programme est exécuté sur un ordinateur.

**Patentansprüche**

1. Lokalisierungsvorrichtung, die enthält:

- einen Speicher (10), der eingerichtet ist, um Abstandsdaten zwischen einer Vielzahl von Ankern und einer oder mehreren mobilen Quellen an einer Vielzahl von voneinander unterschiedlichen Standorten zu empfangen, wobei die Anzahl von Ankern und die Anzahl von Standorten das Kriterium erfüllen, dass die eine größer als vier sein muss und als Primäranzahl bezeichnet wird, und die andere größer als zehn und als Sekundäranzahl bezeichnet wird,

- einen Zerleger (4), der eingerichtet ist, um auf die Abstandsdaten zuzugreifen und um eine Zerlegung einer Matrix in Einzelwerte zu berechnen, die von dem Produkt aus der Matrix der euklidischen Abstände (Edm(X, A)), die aus den Abstandsdaten gewonnen wird, und zwei quadratischen Matrizen gebildet wird, von denen eine eine Dimension gleich der Primäranzahl im Quadrat hat und eine erste Zeile von Nullelementen aufweist, eine erste Spalte, deren Elemente gleich minus eins sind, mit Ausnahme des ersten Elements, das null ist, wobei die anderen Elemente eine Identitätsmatrix einer Ordnung gleich der Primäranzahl minus 1 bilden, und die andere die Transponierte einer Matrix einer Dimension gleich der Sekundäranzahl im Quadrat ist, die eine erste Zeile von Nullelementen aufweist, eine erste Spalte, deren Elemente gleich minus eins sind, mit Ausnahme des ersten Elements, das null ist, wobei die anderen Elemente eine Identitätsmatrix einer Ordnung gleich der Sekundäranzahl minus eins bilden,

- einen Reducer (6), der eingerichtet ist, um einen Auflösungsvektor zu berechnen, der die Differenz zwischen dem Produkt aus einer Vereinfachungsmatrix und dem Auflösungsvektor und einer Matrix gemäß den kleinsten Quadraten minimiert, die von dem Produkt aus der aus den Abstandsdaten gewonnen Matrix der euklidischen Abstände und einerseits einem Vektor, von dem alle Elemente den Wert eins haben, mit Ausnahme des ersten Elements, das null ist, und andererseits einem Vektor gebildet wird, von dem alle Elemente null sind, mit Ausnahme des ersten, das eins ist, wobei die Vereinfachungsmatrix aus der Multiplikation zwischen dem Khatri-Rao-Produkt durch Partitionierung in Zeilen der ersten Matrix der Zerlegung in Einzelwerte, die vom Zerleger (4) mit ihr selbst realisiert wird, und einer Duplikationsmatrix der Dimension drei gewonnen wird, die mit dem Doppelten des Kehrwerts der ersten Matrix der vom Zerleger (4) realisierten Zerlegung in Einzelwerte verkettet ist,

- einen Solver (8), der eingerichtet ist, um einen Inversionsvektor ausgehend von den drei letzten Elementen des Auflösungsvektors und eine Inversionsmatrix zu gewinnen, die ausgehend von den anderen Elementen des Auflösungsvektors gebildet wird, um eine Transformationsmatrix derart zu bestimmen, dass die Inversionsmatrix gleich dem Produkt aus der Transformationsmatrix und ihrer Transponierten ist, und um einerseits eine Matrix von Koordinaten der Anker und andererseits eine Matrix von Koordinaten der Standorte ausgehend von der Transformationsmatrix, vom Inversionsvektor, von der ersten Matrix der vom Zerleger (4) realisierten Zerlegung in Einzelwerte, und vom Produkt aus der zweiten Matrix und der dritten Matrix der vom Zerleger (4) realisierten Zerlegung in Einzelwerte zurückzuschicken.

2. Vorrichtung nach Anspruch 1, wobei der Solver (8) eingerichtet ist, um die Transformationsmatrix als die Aggregation von drei Vektoren der Dimension drei zu bestimmen, von denen der erste der Inversionsvektor dividiert durch den Abstand zwischen dem ersten Anker und der ersten mobilen Quelle ist, der zweite von einem Vektor von Eigenwerten einer Matrix gewonnen wird, die ausgehend von der zweiten Zeile der ersten Matrix der vom Zerleger (4) realisierten Zerlegung in Einzelwerte, vom Inversionsvektor und von der Inversionsmatrix berechnet wird, und der dritte ausgehend von der zweiten Zeile der ersten Matrix der vom Zerleger (4) realisierten Zerlegung in Einzelwerte, vom Inversionsvektor und von der Transformationsmatrix berechnet wird.

3. Vorrichtung nach Anspruch 1, wobei der Solver (8) eingerichtet ist, um die Transformationsmatrix als die Aggregation von drei Vektoren der Dimension drei zu bestimmen, von denen der erste der Inversionsvektor dividiert durch den Abstand zwischen dem ersten Anker und der ersten mobilen Quelle ist, der zweite ausgehend von der zweiten Zeile der ersten Matrix der vom Zerleger (4) realisierten Zerlegung in Einzelwerte, vom Inversionsvektor und von der Inversionsmatrix berechnet wird, und der dritte von einem Vektor von Eigenwerten einer Matrix gewonnen wird, die ausgehend von der zweiten Zeile der ersten Matrix der vom Zerleger (4) realisierten Zerlegung in Einzelwerte, vom Inversionsvektor und von der Inversionsmatrix berechnet wird.

4. Vorrichtung nach Anspruch 1, wobei der Solver (8) eingerichtet ist, um die Transformationsmatrix als die Aggregation von drei Vektoren der Dimension drei zu bestimmen, von denen der erste ausgehend von der Inversionsmatrix und von der zweiten Zeile der ersten Matrix der vom Zerleger (4) realisierten Zerlegung in Einzelwerte berechnet wird, der zweite ausgehend von der Inversionsmatrix, der zweiten Zeile der ersten Matrix der vom Zerleger (4) realisierten Zerlegung in Einzelwerte und der dritten Zeile der ersten Matrix der vom Zerleger (4) realisierten Zerlegung in Einzelwerte berechnet wird, und der dritte ausgehend von der Inversionsmatrix und vom Vektorprodukt zwischen der Transponierten der zweiten Zeile der ersten Matrix der vom Zerleger (4) realisierten Zerlegung in Einzelwerte und von der Transponierten der dritten Zeile der ersten Matrix der vom Zerleger (4) realisierten Zerlegung in Einzelwerte gebildet wird.

5. Vorrichtung nach einem der vorhergehenden Ansprüche, wobei der Solver (8) außerdem eingerichtet ist, um eine Matrix eines Koordinatensystemwechsels zwischen den Koordinaten von drei Ankern in einem Absolutkoordinatensystem und den Koordinaten dieser drei Anker in der vom Solver (8) bestimmten Matrix von Koordinaten der Anker zu bestimmen, und um eine Matrix von Absolutkoordinaten der Standorte ausgehend von der Matrix eines Koordinatensystemwechsels und der vom Solver (8) bestimmten Matrix von Koordinaten der Standorte zurückzuschicken.

6. Computererstelltes Lokalisierungsverfahren, das die folgenden Operationen enthält:

a) Empfang von Abstandsdaten zwischen einer Vielzahl von Ankern und einer oder mehreren mobilen Quellen an einer Vielzahl voneinander unterschiedlicher Standorte, wobei die Anzahl von Ankern und die Anzahl von Standorten das Kriterium erfüllen, dass eine größer als vier sein muss und als Primäranzahl bezeichnet wird, und die andere größer als zehn und als Sekundäranzahl bezeichnet ist,
b) Berechnung einer Zerlegung in Einzelwerte einer Matrix, die vom Produkt aus der Matrix der euklidischen Abstände (Edm(X, A)), die aus den Abstandsdaten gewonnen wird, und zwei quadratischen Matrizen gebildet wird, von denen eine eine Dimension gleich der Primäranzahl im Quadrat hat und eine erste Zeile von Nullelementen aufweist, eine erste Spalte, deren Elemente gleich minus eins sind, mit Ausnahme des ersten Elements, das null ist, wobei die anderen Elemente eine Identitätsmatrix einer Ordnung gleich der Primäranzahl minus 1 bilden, und die andere die Transponierte einer Matrix einer Dimension gleich der Sekundäranzahl im Quadrat ist, die eine erste Zeile von Nullelementen aufweist, eine erste Spalte, deren Elemente gleich minus eins sind, mit Ausnahme des ersten Elements, das null ist, wobei die anderen Elemente eine Identitätsmatrix einer Ordnung gleich der Sekundäranzahl minus eins bilden,
c) Berechnung eines Auflösungsvektors, der die Differenz zwischen dem Produkt aus einer Vereinfachungsmatrix und dem Auflösungsvektor und einer Matrix gemäß den kleinsten Quadraten minimiert, die von dem Produkt aus der aus den Abstandsdaten gewonnen Matrix der euklidischen Abstände und einerseits einem Vektor, von dem alle Elemente den Wert eins haben, mit Ausnahme des ersten Elements, das null ist, und andererseits einem Vektor gebildet wird, von dem alle Elemente null sind, mit Ausnahme des ersten, das eins ist, wobei die Vereinfachungsmatrix aus der Multiplikation zwischen dem Khatri-Rao-Produkt durch Partitionierung der ersten Matrix der Zerlegung in Einzelwerte der Operation b) in Zeilen mit ihr selbst und einer Duplikationsmatrix der Dimension drei gewonnen wird, die mit dem Doppelten des Kehrwerts der ersten Matrix der Zerlegung in Einzelwerte der Operation b) horizontal verkettet ist,
d) Entnahme eines Inversionsvektors ausgehend von den drei letzten Elementen des Auflösungsvektors und einer Inversionsmatrix, die ausgehend von den anderen Elementen des Auflösungsvektors gebildet wird,
e) Bestimmen einer Transformationsmatrix derart, dass die Inversionsmatrix gleich dem Produkt aus der Transformationsmatrix und ihrer Transponierten ist, und
f) Zurückschicken einerseits einer Matrix von Koordinaten der Anker und andererseits einer Matrix von Koordinaten der Standorte ausgehend von der Transformationsmatrix, vom Inversionsvektor, von der ersten Matrix der Zerlegung in Einzelwerte der Operation b) und vom Produkt aus der zweiten Matrix und der dritten Matrix der Zerlegung in Einzelwerte der Operation b).

7. Verfahren nach Anspruch 6, wobei die Operation e) die Bestimmung der Transformationsmatrix als die Aggregation von drei Vektoren der Dimension drei ist, von denen der erste der Inversionsvektor dividiert durch den Abstand zwischen dem ersten Anker und der ersten mobilen Quelle ist, der zweite aus einem Vektor von Eigenwerten einer Matrix gewonnen wird, die ausgehend von der zweiten Zeile der ersten Matrix der Zerlegung in Einzelwerte der Operation b), dem Inversionsvektor und der Inversionsmatrix berechnet wird, und der dritte ausgehend von der zweiten Zeile der ersten Matrix der Zerlegung in Einzelwerte der Operation b), vom Inversionsvektor und von der Inversionsmatrix berechnet wird.

8. Verfahren nach Anspruch 6, wobei die Operation e) die Bestimmung der Transformationsmatrix als die Aggregation von drei Vektoren der Dimension drei ist, von denen der erste der Inversionsvektor dividiert durch den Abstand zwischen dem ersten Anker und der ersten mobilen Quelle ist, der zweite ausgehend von der zweiten Zeile der ersten Matrix der Zerlegung in Einzelwerte der Operation b), vom Inversionsvektor und von der Inversionsmatrix berechnet wird, und der dritte aus einem Vektor von Eigenwerten einer Matrix gewonnen wird, die ausgehend von der zweiten Zeile der ersten Matrix der Zerlegung in Einzelwerte der Operation b), vom Inversionsvektor und von der Inversionsmatrix berechnet wird.

9. Verfahren nach Anspruch 6, wobei die Operation e) die Bestimmung der Transformationsmatrix als die Aggregation von drei Vektoren der Dimension drei ist, von denen der erste ausgehend von der Inversionsmatrix und von der zweiten Zeile der ersten Matrix der Zerlegung in Einzelwerte der Operation b) berechnet wird, der zweite ausgehend von der Inversionsmatrix, von der zweiten Zeile der ersten Matrix der Zerlegung in Einzelwerte der Operation b) und von der dritten Zeile der ersten Matrix der Zerlegung in Einzelwerte der Operation b) berechnet wird, und der dritte ausgehend von der Inversionsmatrix und vom Vektorprodukt zwischen der Transponierten der zweiten Zeile der ersten Matrix der Zerlegung in Einzelwerte der Operation b) und der Transponierten der dritten Zeile der ersten Matrix der Zerlegung in Einzelwerte der Operation b) gebildet wird.

10. Verfahren nach einem der Ansprüche 6 bis 9, das außerdem die folgende Operation enthält:
g) Berechnen einer Matrix eines Koordinatensystemwechsels zwischen den Koordinaten von drei Ankern in einem Absolutkoordinatensystem und den Koordinaten dieser drei Anker in der vom Solver (8) bestimmten Matrix von Koordinaten der Anker, und um eine Matrix von Absolutkoordinaten der Standorte ausgehend von der Matrix des Koordinatensystemwechsels und von der vom Solver (8) bestimmten Matrix von Koordinaten der mobilen Quellen zurückzuschicken.

11. Computerprogrammprodukt, das Programmcodeabschnitte enthält, um das Verfahren nach einem der Ansprüche 6 bis 10 durchzuführen, wenn das Programm auf einem Computer ausgeführt wird.

**Claims**

1. A locating device comprising:

   - a memory (10) arranged to receive data relating to the distance between a plurality of anchors and one or more mobile source(s) at a plurality of locations distinct from each other, the number of anchors and the number of locations meeting the criterion according to which one is greater than four and is referred to as the primary number and the other is greater than ten and is referred to as the secondary number,
   - a decomposer (4) arranged to access the distance data and to calculate a decomposition, into singular values, of a matrix formed by the product of the matrix of the Euclidean distances (Edm(X,A)) derived from the distance data by two square matrices one of which has a dimension equal to the primary number squared and has a first row of zero elements, a first column the elements of which are equal to minus one except the first element which is zero, the other elements forming an identity matrix which order is equal to the primary number minus 1, and the other is the transpose of a matrix with a dimension equal to the secondary number squared having a first row of zero elements, a first column the elements of which are equal to minus one except the first element which is zero, the other elements forming an identity matrix which order is equal to the secondary number minus one,
   - a reducer (6) arranged to calculate a resolution vector minimising, according to the method of least squares, the difference between the product of a simplification matrix by the resolution vector and a matrix formed by the product of the matrix of Euclidean distances derived from the distance data on the one hand by a vector all the elements of which are equal to one except the first element which is zero, and on the other hand by a vector all the elements of which are zero except the first one which is equal to one, the simplification matrix being derived from the multiplication between the Khatri-Rao product by partitioning into rows the first matrix of the decomposition into singular values carried out by the decomposer (4) with itself and a three-dimensional duplication matrix, concatenated with the double of the opposite of the first matrix of the decomposition into singular values carried out by the decomposer (4),
   - a solver (8) arranged to derive an inversion vector from the last three elements of the resolution vector and an inversion matrix formed from the other elements of the resolution vector, to determine a transformation matrix such that the inversion matrix is equal to the product of the transformation matrix by its transpose, and to return on the one hand a matrix of coordinates of the anchors and on the other hand a matrix of coordinates of the locations from the transformation matrix, the inversion vector, the first matrix of the decomposition into singular values carried out by the decomposer (4) and the product of the second matrix and the third matrix of the decomposition into singular values carried out by the decomposer (4).

2. The device according to claim 1, wherein the solver (8) is arranged to determine the transformation matrix as the aggregation of three three-dimensional vectors, the first one is the inversion vector divided by the distance between the first anchor and the first mobile source, the second one is derived from a singular values vector of a matrix calculated from the second row of the first matrix of the decomposition into singular values carried out by the decomposer (4), the inversion vector and the inversion matrix, and the third one is calculated from the second row of the first matrix of the decomposition into singular values carried out by the decomposer (4), the inversion vector and the transformation matrix.

3. The device according to claim 1, wherein the solver (8) is arranged to determine the transformation matrix as the aggregation of three three-dimensional vectors, the first one is the inversion vector divided by the distance between the first anchor and the first mobile source, the second one is calculated from the second row of the first matrix of the decomposition into singular values carried out by the decomposer (4), the inversion vector and the inversion matrix, and the third one is derived from a singular values vector of a matrix calculated from the second row of the first matrix of the decomposition into singular values carried out by the decomposer (4), the inversion vector, and the inversion matrix.

4. The device according to claim 1, wherein the solver (8) is arranged to determine the transformation matrix as the aggregation of three three-dimensional vectors, the first one is calculated from the inversion matrix and the second row of the first matrix of the decomposition into singular values carried out by the decomposer (4), the second one is calculated from the inversion matrix, the second row of the first matrix of the decomposition into singular values carried out by the decomposer (4) and the third row of the first matrix of the decomposition into singular values carried out by the decomposer (4), and the third one is formed from the inversion matrix and the vector product between the transpose of the second row of the first matrix of the decomposition into singular values carried out by the decomposer (4) and the transpose of the third row of the first matrix of the decomposition into singular values carried out by the decomposer (4).

5. The device according to one of the preceding claims, wherein the solver (8) is further arranged to calculate a reference change matrix between the coordinates of three anchors in an absolute reference frame and the coordinates of these three anchors in the anchor coordinate matrix determined by the solver (8), and to return an absolute coordinate matrix of the locations from the reference change matrix and the coordinate matrix of the locations determined by the solver (8).

6. A computer-implemented locating method comprising the following operations:

a) receiving data relating to the distance between a plurality of anchors and one or more mobile source(s) at a plurality of locations distinct from each other, the number of anchors and the number of locations meeting the criterion according to which one is greater than four and is referred to as the primary number and the other is greater than ten and is referred to as the secondary number,

b) calculating a decomposition, into singular values, of a matrix formed by the product of the matrix of Euclidean distances $(Edm(X,A))$ derived from the distance data by two square matrices, one of which has a dimension equal to the primary number squared and has a first row of zero elements, a first column the elements of which are equal to minus one except the first element which is zero, the other elements forming an identity matrix which order is equal to the primary number minus one, and the other is the transpose of a matrix with a dimension equal to the secondary number squared having a first row of zero elements, a first column the elements of which are equal to minus one except the first element which is zero, the other elements forming an identity matrix the order of which is equal to the secondary number minus one,

c) calculating a resolution vector minimising, according to the method of least squares, the difference between the product of a simplification matrix by the resolution vector and a matrix formed by the product of the matrix of Euclidean distances derived from the distance data on the one hand by a vector all the elements of which are equal to one except the first element which is zero, and on the other hand by a vector all the elements of which are zero except the first one which is equal to one, the simplification matrix being derived from the multiplication between the Khatri-Rao product by partitioning into rows the first matrix of the decomposition into singular values of the operation b) with itself and a three-dimensional duplication matrix, horizontally concatenated with the double of the opposite of the first matrix of the decomposition into singular values of step b),

d) deriving an inversion vector from the last three elements of the resolution vector and an inversion matrix formed from the other elements of the resolution vector,

e) determining a transformation matrix such that the inversion matrix is equal to the product of the transformation matrix by its transpose, and

f) returning on the one hand a matrix of coordinates of the anchors and on the other hand a matrix of coordinates of the locations from the transformation matrix, the inversion vector, the first matrix of the decomposition into singular values of the operation b) and the product of the second matrix and the third matrix of the decomposition into singular values of the operation b).

7. The method according to claim 6, wherein the operation e) of determining the transformation matrix as the aggregation of three three-dimensional vectors, the first one is the inversion vector divided by the distance between the first anchor and the first mobile source, the second one is derived from a singular values vector of a matrix calculated from the second row of the first matrix of the decomposition into singular values of the operation b), the inversion vector and the inversion matrix, and the third one is calculated from the second row of the first matrix of the decom-

**EP 3 785 040 B1**

position into singular values of the operation b), the inversion vector, and the inversion matrix.

8. The method according to claim 6, wherein the operation e) of determining the transformation matrix as the aggregation of three three-dimensional vectors, the first one is the inversion vector divided by the distance between the first anchor and the first mobile source, the second one is calculated from the second row of the first matrix of the decomposition into singular values of the operation b), the inversion vector and the inversion matrix, and the third one is derived from a singular values vector of a matrix calculated from the second row of the first matrix of the decomposition into singular values of the operation b), the inversion vector, and the inversion matrix.

9. The method according to claim 6, wherein the operation e) of determining the transformation matrix as the aggregation of three three-dimensional vectors, the first one is calculated from the inversion matrix and the second row of the first matrix of the decomposition into singular values of the operation b), the second one is calculated from the inversion matrix, the second row of the first matrix of the decomposition into singular values of the operation b) and the third row of the first matrix of the decomposition into singular values of the operation b), and the third one is formed from the inversion matrix and the vector product between the transpose of the second row of the first matrix of the decomposition into singular values of the operation b) and the transpose of the third row of the first matrix of the decomposition into singular values of the operation b).

10. The method according to one of claims 6 to 9, further comprising the following operation:
    g) calculating a reference change matrix between the coordinates of three anchors in an absolute reference frame and the coordinates of these three anchors in the anchor coordinate matrix determined by the solver (8), and returning an absolute coordinate matrix of the locations from the reference change matrix and the coordinate matrix of the mobile sources determined by the solver (8).

11. A computer program product comprising program code portions for implementing the method according to one of claims 6 to 10 when said program is executed on a computer.

**Fig.1**

**Fig.2**

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3001217 A
- EP 1617601 A
- US 20115201309 A

**Littérature non-brevet citée dans la description**

- **YUE WANG et al.** Anchor-based three-dimensional localization using range measurements. *8TH International Conférence On Wireless Communications, Networking And Mobile Computing,* 01 Septembre 2012